# EUROPEAN PATENT APPLICATION

(11) **EP 4 513 071 A1**
(43) Date of publication of application: **26.02.2025**
(21) Application number: 23193482.9
(22) Date of filing: 25.08.2023
(51) Int. Cl.: F16L 25/12, F16L 27/08, F16L 23/024

(54) **A PIPELINE ADAPTER**

(71) Applicant: Radius Systems Limited, South Normanton Derbyshire DE55 2JJ (GB)
(72) Inventor: BHAVIN, Mistry, South Normanton, DE55 2JJ (GB)
(74) Representative: HGF

(57) **Abstract**

A pipeline adapter (100, 200) suitable for connecting misaligned pipelines, wherein at least one of the pipelines is a plastics pipeline, the pipeline adapter comprising: a first pipe section (102) extending along a first longitudinal axis (114) has a flanged end, comprising: a flange (106) which forms a mating surface (112), a backing plate (108) formed of a material which is more rigid than the flange (106), the backing plate (108) having a plurality of bores (120); the pipeline adapter (100, 200) includes a second pipe section (104) extending along a second longitudinal axis (116), the first pipe section (102) is in fluid communication with the second pipe section (104) and the first longitudinal axis (114) forms a first predefined angle (α) with the second longitudinal axis (116), the first predefined angle (α) is greater than or equal to 5 degrees.

## Description

### FIELD OF INVENTION

The present invention relates to pipeline adapters and pipeline adaptation systems, intended for utilization in fluid or gas piping systems.

### BACKGROUND

Pipeline systems are critical infrastructures that enable the efficient transmission of fluids, including water, oil, and gas, over long distances. Typically, these pipeline networks are laid out underground, undersea, or overland to ensure safety and reduce environmental impact. These networks often span varying terrains, encompassing a wide range of geographical and geological complexities. Given these factors, it is not uncommon to encounter situations where two pipelines need to be connected but are not perfectly aligned due to the existing site conditions or unavoidable circumstances during construction.

The problems of misaligned pipelines or changing the direction of a pipeline to avoid an obstacle, such as an extant pipeline pose serious challenges in pipeline construction and maintenance, directly affecting the safety, efficiency, and integrity of the entire pipeline system. Misalignment can occur due to various reasons including soil movement, geological disruptions, differential settlement, imprecise installation, material expansion and contraction, or seismic activity. The degree of misalignment can vary significantly, from minor deviations that require a simple adjustment to major discrepancies that demand extensive remediation.

One solution to the problem of connecting misaligned pipelines is the use of bespoke or custom-made adapters. These adapters are designed to bridge the gap between two pipelines that do not line up perfectly, effectively resolving the issue of misalignment. However, this approach is not without its complications and limitations.

Firstly, the design and production of a bespoke pipeline adapter is typically a complex and time-consuming process. It involves precise calculations to determine the exact dimensions and angles required to correct the misalignment. Once these specifications are determined, the adapter must be manufactured, a process that requires specialized equipment and expertise. Depending on the complexity of the misalignment and the specific requirements of the project, this can extend the project timeline significantly.

Secondly, the use of a bespoke pipeline adapter can introduce additional financial burdens to the project. The cost of designing and manufacturing a custom-made adapter is typically higher than purchasing a standard, off-the-shelf part. Moreover, this cost does not include the potential expenses associated with testing and certifying the adapter to ensure it meets the requisite industry standards.

Thirdly, there is the question of long-term reliability and maintenance. Bespoke adapters, by their nature, lack the track record of performance and reliability that comes with standardised components that have been used and tested over many years in the industry. This raises concerns about the long-term viability of the solution and the potential need for regular maintenance or replacement of the adapter.

As such, a solution is required which mitigates or solves the above mentioned issues.

### BRIEF SUMMARY

A first aspect of the present invention provides a pipeline adapter suitable for connecting misaligned pipelines, wherein at least one of said misaligned pipelines is a plastics pipeline, the pipeline adapter comprising: a first pipe section extending along a first longitudinal axis and comprising a flanged end, wherein said flanged end comprises: an outwardly extending annular flange which forms a mating surface, a backing plate formed of a material which is more rigid than said outwardly extending annular flange, said backing plate comprising a plurality of bores; wherein said pipeline adapter further comprises a second pipe section extending along a second longitudinal axis said first pipe section in fluid communication with said second pipe section and; wherein first longitudinal axis forms a first predefined angle with the second longitudinal axis wherein said first predefined angle is greater than or equal to 5 degrees.

According to the present invention, a new and improved pipeline adapter for connecting misaligned pipelines and changing the route of pipelines to avoid obstacles is provided. One notable advantage of the adapter described herein is the presence of the backing plate with a plurality of bores in combination with the first predefined angle between the first and second pipe sections. These features taken in combination allow a user to rotate the pipeline adapter to meet the required angle for adjusting the direction of a first portion of a misaligned pipeline to face a second pipeline or at least improve the relative alignment. The second pipe section can be truncated (by cutting for example) or extended (by attaching further straight pipe sections or a further pipeline adapter according to the present invention). In this way, the misaligned pipelines can be brought into alignment and optionally, connected using the provided outwardly extending annular flange and backing plate.

In an embodiment said backing plate is free to rotate with respect to said first pipe section.

Whilst providing a plurality of bores in the backing plate allows for a number of discrete connection options, allowing the backing plate to rotate with respect to the first pipe section allows for any angle of connection between the pipeline adapter and the pipeline.

In an embodiment said flanged end comprises a metal support ring with an internal radius which is larger than the internal radius of the first pipe section.

The metal support ring strengthens the connection and provides a solid support for the fluid tight seal between the pipeline adapter and the pipeline.

In an embodiment said first pipe section and said second pipe section are butt welded together.

By butt welding the first pipe section and the second pipe section together, a strong connection with minimal internal variation is created, allowing for a seamless connection and minimal disruption to fluid flow.

In an embodiment the first pipe section and the second pipe section have an external diameter equal or greater than 90mm.

In an embodiment said first predefined angle is one of 5, 11.25 or 22.5 or 45 or 90 degrees.

In an embodiment said outwardly extending annular flange is formed as a rim of material about an opening of said first pipe section.

In an embodiment said outwardly extending annular flange is stepped relative to the external diameter of the rest of said first pipe section.

In an embodiment the pipeline adapter comprises a third pipe section in fluid communication with said second pipe section and extending along a third longitudinal axis, wherein said third longitudinal axis forms a second predefined angle with the second longitudinal axis; the third pipe section further comprising a second flanged end comprising: a second outwardly extending annular flange which forms a second mating surface, a second backing plate formed of a material which is more rigid than said second outwardly extending annular flange, said second backing plate comprising a plurality of bores.

In an embodiment said second pipe section is further defined by a transverse plane which spans a diameter of said pipe, said transverse plane being perpendicular to said second longitudinal axis and wherein said first pipe section and said third pipe section are at a rotated angle to each other about said transverse plane.

In an embodiment said second pipe section and said third pipe section are butt welded together.

In an embodiment said first predefined angle and said second predefined angle are equal.

A further aspect of the present invention comprises a pipeline adaptation system comprising a plurality of pipeline adapters as described above, each of said pipeline adapters connected to at least one further pipeline adapters such that when constructed the pipeline adaption system connects two disparately located pipelines or systems.

In an embodiment the pipeline adapters are connected using said flange(s).

In an embodiment the pipeline adaptation system comprises at least one straight section, comprising a straight pipe section with a first and a second end, at least one of said first and second ends comprising an outwardly extending annular flange, and a reinforcing ring formed of a material which is more rigid than said straight pipe section.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1A illustrates a side view of a pipeline adapter in accordance with an embodiment of the present invention.
FIG. 1B illustrates a top view of a pipeline adapter in accordance with an embodiment of the present invention.
FIG. 2A illustrates a perspective view of a pipeline adapter in accordance with one embodiment of the present invention.
FIG. 2B illustrates a top view of a pipeline adapter in accordance with one embodiment of the present invention.
FIG. 3 illustrates a pipeline attached to a pipeline adapter in accordance with one embodiment of the present invention.
FIG. 4 illustrates a pipeline connected to a second pipeline using a pipeline adapter in accordance with one embodiment of the present invention.

### DETAILED DESCRIPTION

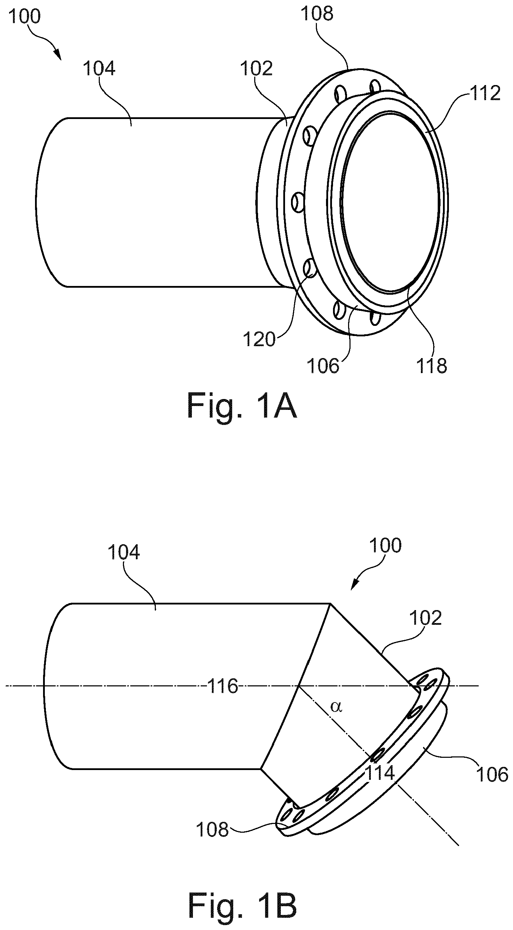

FIG. 1A illustrates a pipeline adapter 100 according to an aspect of the present invention. The pipeline adapter 100 includes a first pipe section 102, connected at an angle to a second pipe section 104. The first pipe section 102 comprises a flanged end including an outwardly extending annular flange 106, a backing plate 108 comprising bores 120 for attachment means. The outwardly extending annular flange 106 comprises a mating surface 112 for abutting an equivalent surface on a pipeline.

In use, the outwardly extending annular flange 106 abuts a pipeline which needs to be realigned. Prior to attachment, the backing plate 108 can rotate freely with respect to the first pipe section 102 such that even if the equivalent of the backing plate on the pipeline is attached to the pipeline, the backing plate 108 is free to rotate. This allows the user to orient the second pipe section 104 in the correct direction to align with the next section of the pipeline or pipeline terminal or any other feature. Additionally, an optional metal support ring 118 may be utilised to provide additional strength and rigidity for the mating surface 112.

FIG. 1B shows a top view of the pipeline adapter 100. The first pipe section 102 extends along a first longitudinal axis 114 and the second pipe section 104 extends along a second longitudinal axis 116. The first 114 and second longitudinal 116 axes are at an angle α with respect to each other, the angle being defined as the variation from the main axis of the second pipe section 104. That is to say, the first pipe section 102 and the second pipe section 104 extend along different longitudinal axes the angle between them, α, being defined as the variation from the main axis of the second pipe section 104. The backing plate 108 can rotate freely with respect to the first pipe section 102 such that the second pipe section 104 allowing the connection between the outwardly extending annular flange 106 and the pipeline to have any outgoing angle. The angle α can be anywhere between 1 and 90 degrees or even larger. Ideally, a set of pipeline adapters 100 would include angles of 11.25, 22.5, 45 and 90 degrees. By including a plurality of pipeline adapters 100 in an adaptation system and curtailing the length of the second pipe section 104 allows operatives to change the angle, depth, yaw, and height of the pipeline relative to the existing pipeline.

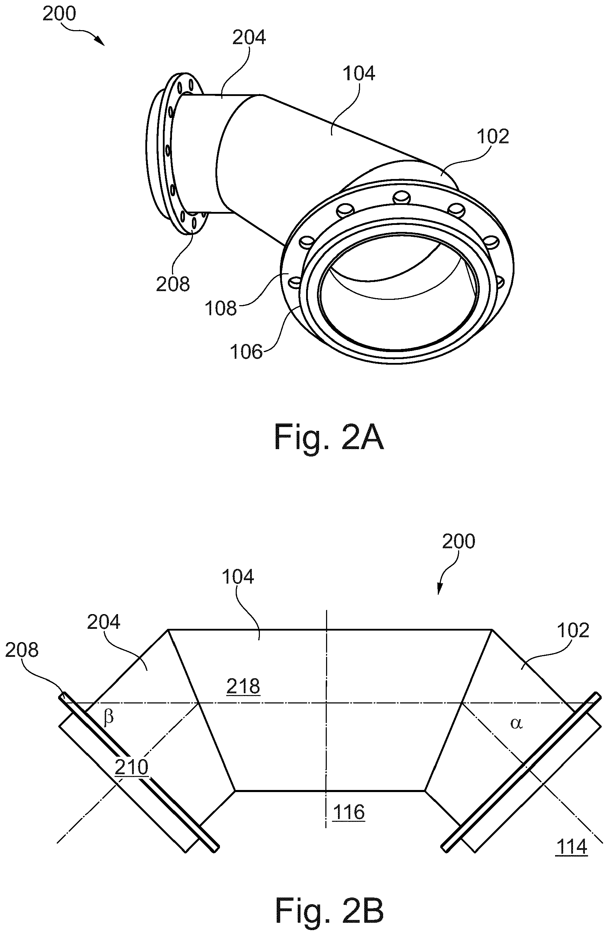

FIG. 2A illustrates a pipeline adapter 200 comprising a first pipe section 102, second pipe section 104 and a further third pipe section 204. The first pipe section and the second pipe section are the same as shown in FIG. 1A and FIG. 1B. The third pipe section 204 is substantially the same as the first pipe section 102, including a second backing plate 208 an outwardly extending annular flange and a metal support ring, but located at the opposite end of the second pipe section 104.

FIG. 2B illustrates a top view of the pipeline adapter 200. The third pipe section 204 extends along a third longitudinal axis 210 which is at a second predefined angle β relative to the second longitudinal axis 116. The second predefined angle β is measured from deviation from the third longitudinal axis 210 relative to the second longitudinal axis 116. The second predefined angle β may be equal to the first predefined angle α or it may be different. The second predefined angle β may be anywhere between 1 and 90 degrees or even larger. Additionally, the pipeline adapter 200 has a transverse plane 218 which spans a diameter of the second pipe section 104, the transverse plane is perpendicular to the second longitudinal axis 116 and the first pipe section 102 and the third pipe section 204 can be at a rotated angle (δ) to each other about said transverse plane 218. That is to say, FIG. 2B depicts a rotated angle δ, a different example of pipeline adapter 200 may have a rotated angle of δ ± 180 degrees, with the first pipe section 102 held in its depicted position and the third pipe section 204 appearing to recede into the page or appearing to emerge out of the page. The angle δ may be anywhere from 0-360 degrees.

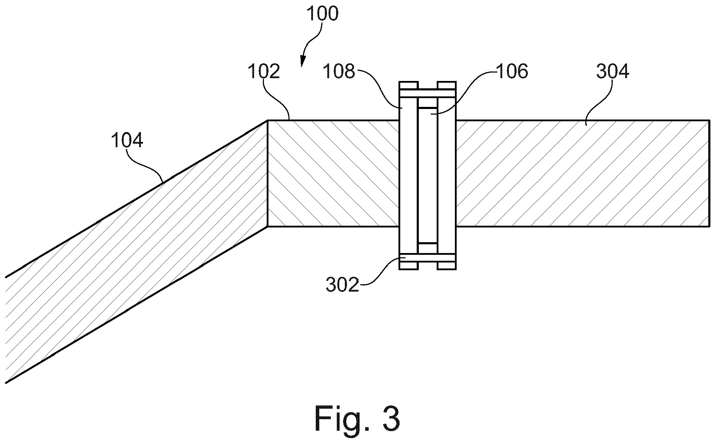

FIG. 3 illustrates a first pipeline section 304 adapted using a pipeline adapter 100 to change the angle of the pipeline to provide an adaptation. The pipeline adapter 100 is attached to the first pipeline section 304 by the outwardly extending annular flange 106 which abuts a flange of the first pipeline section 304 and is held in position by the backing plate 108 of the pipeline adapter 100 and a backing plate or flanged portion of the first pipeline section 304. Attachment means 302 such as bolts or rivets are used to force the outwardly extending annular flange 106 against the first pipeline section 304 to create a fluid tight connection. The first pipe section 102 and the first pipeline section 304 and the second pipe section 104 are then all in fluid communication with the same internal annular diameter, allowing for a connection which changes the direction of the pipeline without changing the diameter. Prior to installation, the backing plate 108 is free to rotate, so the angle of the second pipe section 104 relative to the first pipeline section 304 can be determined to point the pipeline in a desired direction.

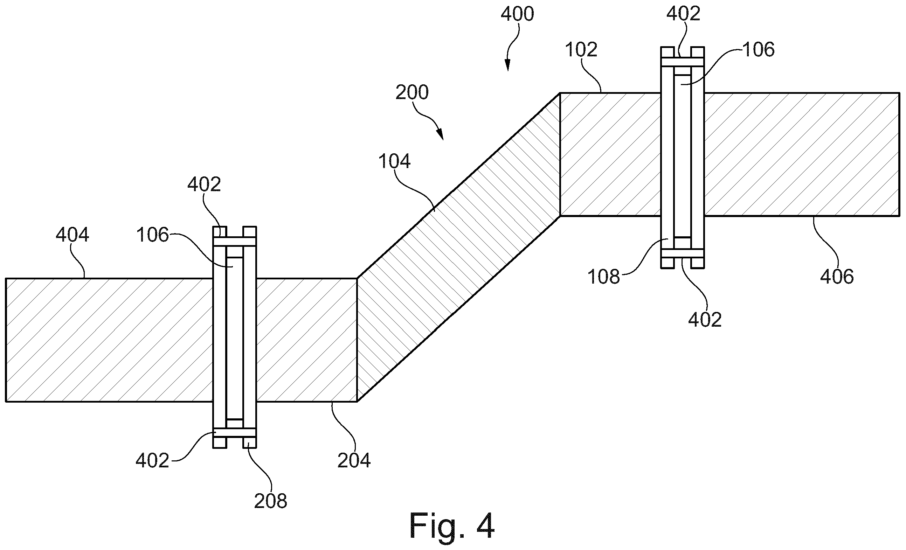

FIG. 4 illustrates an adapted pipeline 400 comprising a first pipeline section 404 connected to a second pipeline section 406 via a pipeline adapter 200. The first pipeline section 404 and the second pipeline section 406 are misaligned and require an adapter to rectify the misalignment. The pipeline adapter 200 can be connected to either of the first pipeline section 404 and the second pipeline section 406 to create an adapted pipeline 400. The outwardly extending annular flange 106 abuts a flanged end of the second pipeline section 406 and backing plate 108 is connected to a backing plate or flange of the second pipeline section 406. The backing plate 208 of the pipeline adapter 200 and the backing plate of the second pipeline section 404 are connected by an attachment means 402 such as bolts, rivets etc through the bores 120 of the second backing plate 208.

In this specification, the term "degree" is defined as a unit of measurement for angles. Each degree represents a fractional portion of a full circular rotation. The circle, which is 360 degrees in total, is the reference for this measurement system. Therefore, one degree is equal to one three hundred and sixtieth (1/360th) of the total 360 degrees that make up a complete circle. This unit of measurement is used to quantify the size of an angle, representing the amount of rotation or turn between two intersecting lines or planes.

Throughout the description and claims of this specification, the words "comprise" and "contain" and variations of the words, for example "comprising" and "comprises," means "including but not limited to," and is not intended to (and does not) exclude other moieties, additives, components, integers, or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties, or groups described in conjunction with a particular aspect, embodiment or example of the invention are to be understood to be applicable to any other aspect, embodiment or example described herein unless incompatible therewith.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent, or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A pipeline adapter suitable for connecting misaligned pipelines, wherein at least one of said misaligned pipelines is a plastics pipeline, the pipeline adapter comprising:
a first pipe section (102) extending along a first longitudinal axis and comprising a flanged end,
wherein said flanged end comprises:
an outwardly extending annular flange (110) which forms a mating surface,
a backing plate (106) formed of a material which is more rigid than said outwardly extending annular flange, said backing plate (106) comprising a plurality of bores;
wherein said pipeline adapter further comprises a second pipe section (104) extending along a second longitudinal axis said first pipe section (102) in fluid communication with said second pipe section (104) and;
wherein first longitudinal axis forms a first predefined angle (α) with the second longitudinal axis wherein said first predefined angle (α) is greater than or equal to 5 degrees.

2. The pipeline adapter of claim 1 wherein said backing plate (106) is free to rotate with respect to said first pipe section (102).

3. The pipeline adapter of claim 1 or 2 wherein said flanged end comprises a metal support ring with an internal radius which is larger than the internal radius of the first pipe section.

4. The pipeline adapter of any one of claims 1 to 3 wherein said first pipe section (102) and said second pipe section (104) are butt welded together.

5. The pipeline adapter of any one of claims 1 to 4 wherein the first pipe section (102) and the second pipe section (104) have an internal diameter greater than 125mm.

6. The pipeline adapter of any one of claims 1 to 5 wherein said first predefined angle (α) is one of 5, 11.25 or 22.5 or 45 or 90 degrees.

7. The pipeline adapter of any one of claims 1 to 6 wherein said outwardly extending annular flange (110) is formed as a rim of material about an opening of said first pipe section (102).

8. The pipeline adapter of any one of claims 1 to 7 wherein said outwardly extending annular flange (110) is stepped relative to the external diameter of the rest of said first pipe section.

9. The pipeline adapter of any one of claims 1 to 8 further comprising a third pipe section in fluid communication with said second pipe section and extending along a third longitudinal axis,
wherein said third longitudinal axis forms a second predefined angle (β) with the second longitudinal axis;
the third pipe section further comprising a second flanged end comprising:
a second outwardly extending annular flange which forms a second mating surface,
a second backing plate formed of a material which is more rigid than said second outwardly extending annular flange, said second backing plate comprising a plurality of bores.

10. The pipeline adapter of claim 9 wherein said second pipe section is further defined by a transverse plane which spans a diameter of said pipe, said transverse plane being perpendicular to said second longitudinal axis and wherein said first pipe section and said third pipe section are at a rotated angle (δ) to each other about said transverse plane.

11. The pipeline adapter of claim 9 or 10 herein said second pipe section and said third pipe section are butt welded together.

12. The pipeline adapter of any one of claims 9 to 11 wherein said first predefined angle and said second predefined angle are equal.

13. A pipeline adaptation system comprising a plurality of pipeline adapters according to any one of the preceding claims, each of said pipeline adapters connected to at least one further pipeline adapters such that when constructed the pipeline adaption system connects two disparately located pipelines or systems.

14. The pipeline adaptation system of claim 13 wherein the pipeline adapters are connected using said flange(s).

15. The pipeline adaptation system claim 13 or 14 further comprising at least one straight section, comprising a straight pipe section with a first and a second end, at least one of said first and second ends comprising an outwardly extending annular flange, and a reinforcing ring formed of a material which is more rigid than said straight pipe section.
